# FASCICULE DE BREVET EUROPEEN

(11) **EP 2 458 161 B1**
(45) Date de publication et mention de la délivrance du brevet: **12.11.2014**
(21) Numéro de dépôt: 10192394.4
(22) Date de dépôt: 24.11.2010
(51) Int. Cl.: F01D 21/00, F01D 25/18, F02C 7/06

(54) **Méthode de monitoring du système d'huile d'une turbomachine**
Überwachungsmethode des Ölsystems eines Turbotriebwerks
Method for monitoring the oil system of a turbomachine

(43) Date de publication de la demande: 30.05.2012
(73) Titulaire: Techspace Aero S.A., 4041 Milmort (BE)
(72) Inventeur: Raimarckers, Nicolas, 4263 Tourinne (BE); Cornet, Albert, 4800 Vevriers (BE); Strengnart, Marc, 4367 Fizel Le Marzal (BE); Charlier, Jacques, 4890 Thimister-Clermont (BE)
(74) Mandataire: Pronovem

(56) Documents cités:
- EP-A1- 2 072 762
- EP-A2- 2 025 881
- EP-A2- 2 246 529

## Description

### Objet de l'invention

La présente invention se rapporte au domaine général de la lubrification de turbomachine. Elle se rapporte plus particulièrement à une méthode de monitoring global du système d'huile d'une turbomachine.

### Etat de la technique

Une turbomachine aéronautique comporte de nombreux éléments nécessitant d'être lubrifiés et refroidis à l'aide d'un système d'huile; il s'agit notamment des paliers à roulement utilisés pour supporter les arbres de rotation, ainsi que les engrenages du boîtier d'entraînement d'accessoires.

Sur un turboréacteur moderne, le système de lubrification est muni de plusieurs capteurs tels que des capteurs de niveau de réservoir, de pression d'huile, de température d'huile et de pression différentielle aux bornes du filtre. A ce jour, les capteurs présents dans le système d'huile sont généralement utilisés pour détecter une panne lorsqu'elle est imminente ou avérée. Ceci entraîne donc des coûts importants liés à la maintenance programmée et aux conséquences des pannes non détectées.

Le traitement du signal fourni par les capteurs existant dans le moteur permettrait l'identification du comportement du système d'huile et une détection de panne éventuelle sans attendre les entretiens. Les prédictions d'autonomie restante autoriseraient en outre la mise en place de maintenances prédictives plutôt que programmées de la turbomachine.

La détection d'un problème est actuellement basée sur un simple seuil bas ou haut. Un signal de dérive importante par rapport aux références du comportement sain permettrait de détecter le problème et de prévenir la panne.

Des approches de systèmes de contrôle global de santé de l'avion ou du moteur sont en cours d'étude mais ne se concentrent pas sur le système d'huile. En conséquence, elles sont peu sensibles à ce système soit par manque d'input (pas d'utilisation des signaux du système d'huile) soit par surabondance d'informations (données du système d'huile noyées dans la masse de données de l'avion).

Dans l'état de la technique, le document WO 2008/152346 A1 propose une méthode de contrôle de santé ("health monitoring" en anglais) d'une turbomachine et, plus particulièrement, des performances d'un compresseur. La méthode consiste à obtenir des données (par ex. la pression et la température du coeur du turboréacteur) de capteurs disposés sur au moins deux moteurs de la turbomachine en régime constant, à calculer une différence en pourcentage entre ces données et des valeurs de référence pour chacun des moteurs, à comparer la différence entre les différences en pourcentage obtenues pour chacun des moteurs et, si cette différence excède une valeur prédéterminée, à signaler qu'il y a un problème sur un des moteurs. Cette méthode n'est pas axée sur le système d'huile et nécessite un modèle de référence.

On connaît également de la demande EP 2 072 762 A1 un procédé de maintenance prédictive où sur base du traitement du signal du capteur de niveau de l'huile dans le réservoir, la consommation et l'autonomie en huile sont calculées. Ce procédé permet ainsi de détecter une consommation anormale d'huile et, par là-méme, une fuite d'huile ou une fuite de carburant dans l'huile.

On connaît aussi de la demande EP 2 025 '881 A2 un système de lubrification muni de capteurs tels qu'un capteur de niveau d'huile, un capteur de température d'huile et deux capteurs de pression, et d'un contrôleur configuré pour déterminer, en réponse aux signaux issus des capteurs, le statut du système de lubrification et pour pronostiquer les maintenances.

En sus du passage d'une philosophie de réaction à une utilisation proactive du signal du capteur de niveau d'huile dans le réservoir telle que proposée dans la demande EP 2 072 762 A1, l'utilisation proactive de plusieurs signaux des capteurs existants (capteurs de niveau d'huile, de pression d'huile, de température d'huile, de pression aux bornes du filtre) et de signaux issus de capteurs supplémentaires permettrait de compléter le health monitoring du système d'huile et de détecter les pannes du système d'huile de façon plus complète et plus fiable.

### Buts de l'invention

La présente invention vise à fournir une méthode globale de health monitoring permettant le diagnostic et le pronostic de différentes pannes du moteur et du système de lubrification/refroidissement par le système de lubrification/refroidissement.

La présente invention vise à remplacer la maintenance programmée par une maintenance prédictive et ainsi éviter les maintenances inutiles.

La présente invention vise en outre à réduire les incidents en vol (ATO pour *Aborted Take-Off,* IFSD pour *In-Flight Shut-Down,* D&C pour *Delay & Cancellation).*

### Résumé de l'invention

La présente invention se rapporte à une méthode globale de monitoring permettant le calcul de l'autonomie d'un système de lubrification d'un moteur d'avion et permettant en outre le diagnostic et le pronostic d'une pluralité de problèmes et pannes du moteur et de son système de lubrification à l'aide de mesures prises par des capteurs disposés dans ledit système de lubrification, la méthode comprenant l'étape de calculer le statut du système de lubrification à un moment donné et de calculer son évolution dans le temps afin de déterminer la durée de vie restante avant une panne, et comprenant en outre les étapes selon la revendication 1.

Selon des modes particuliers de l'invention, la méthode comporte au moins une ou une combinaison appropriée des caractéristiques suivantes:
- elle s'affranchit des effets parasites influençant les mesures en comparant les signaux de deux moteurs de l'avion, éventuellement avec une valeur de référence, lesdits moteurs étant dans des conditions sensiblement identiques, et/ou en comparant deux phases d'un même vol ou de vols différents pour lesquelles les effets parasites sont identiques et/ou en modélisant les effets parasites, ladite modélisation étant empirique et/ou physique;
- les capteurs mesurent un niveau d'huile et/ou une température d'huile et/ou une pression d'huile et/ou une pression différentielle aux bornes d'un filtre et/ou la présence de débris dans l'huile et/ou la qualité de l'huile;
- elle est utilisée pour la gestion en vol de l'avion et/ou pour la gestion de la maintenance de l'avion et elle est apte à diagnostiquer et à pronostiquer une fuite d'huile, un vieillissement, une casse et/ou une surchauffe de paliers contenus dans une enceinte du système de lubrification, une cokéfaction de l'huile dans des tuyauteries, un encrassement/colmatage dans un circuit d'alimentation en huile, une fuite de fuel dans l'huile et/ou une détérioration de la qualité de l'huile;
- par ordre croissant de précision du calcul du statut, de l'évolution et de l'autonomie du système, les mesures sont prises comme suit:
   - les mesures sont prises en début et fin de vol et le statut, l'évolution et l'autonomie sont calculés sur base de ces mesures;
   - ou les mesures sont prises en début et fin de chaque phase de vol et le statut, l'évolution et l'autonomie sont calculés sur base de ces mesures pour chaque phase de vol;
   - ou les mesures sont prises plusieurs fois par phase de vol et le statut, l'évolution et l'autonomie sont calculés sur base de ces mesures pour chaque phase de vol;
   - ou les mesures sont prises plusieurs fois par phase de vol ainsi que pendant les transitoires séparant les phases de vol et le statut, l'évolution et l'autonomie sont calculés sur base de ces mesures pour chaque phase de vol et pendant les transitoires;
- elle compare des paramètres des modèles de calcul du statut et/ou des paramètres des modèles de calcul de l'évolution avec des paramètres de modèles de référence afin de détecter un comportement anormal;
- les modèles de référence sont un modèle de gulping et/ou un modèle de génération de débris et/ou un modèle de niveau de réservoir d'huile en fonction du contenu et/ou un modèle de performance d'une pompe et/ou un modèle de différence de pression aux bornes d'un filtre et/ou modèle de génération de chaleur dans l'enceinte;
- plusieurs enregistrements de données relatives au vol en cours et aux vols précédents sont effectués pour initialiser les paramètres des modèles, pour initialiser des paramètres de calibration des capteurs, pour comparer les paramètres des modèles de calcul du statut et de l'évolution et/ou les paramètres de calibration à ceux des modèles de référence et ainsi repérer une dérive, pour mettre à jour les paramètres des modèles sur base des modèles des vols récents afin de prendre en compte le vieillissement du moteur et afin de réaliser une amélioration continue des différents paramètres grâce au retour d'expérience;
- une alerte est déclenchée lorsque le statut a atteint un niveau critique et/ou lorsque l'évolution est anormale et/ou lorsqu'une dérive des paramètres des modèles de calcul du statut et/ou des paramètres des modèles de calcul de l'évolution est observée et/ou lorsque l'autonomie est insuffisante;
- elle renvoie le statut du système de lubrification vers un système supérieur de monitoring d'un moteur ou de l'avion;
- une ou plusieurs données issues des mesures et/ou des modèles de référence et/ou des modèles des effets parasites sont fusionnées pour valider une détection d'un problème ou d'une panne:
   - des données sur le régime moteur et issues du modèle de performance d'une pompe sont fusionnées avec les mesures de température et de pression d'huile pour valider la détection du colmatage d'éléments du circuit d'alimentation tels que le filtre, des injecteurs et des échangeurs;
   - et/ou des données sur le régime moteur et issues du modèle de performance d'une pompe et du modèle de différence de pression aux bornes du filtre sont fusionnées avec les mesures de température d'huile et de différence de pression aux bornes du filtre pour valider une détection du colmatage du filtre;
   - et/ou des données sur le régime moteur et issues du modèle de performance d'une pompe sont fusionnées avec les mesures de température et de pression d'huile ainsi qu'avec les mesures de différence de pression aux bornes du filtre pour distinguer le colmatage du filtre du colmatage d'un autre élément du circuit d'alimentation;
   - et/ou des données sur le régime moteur et issues du modèle de génération de chaleur dans l'enceinte sont fusionnées avec les mesures de température d'huile pour valider une détection d'une génération de chaleur anormale;
   - et/ou des données sur le régime moteur et issues du modèle de génération de chaleur dans l'enceinte sont fusionnées avec les mesures de température d'huile, de débris et du capteur de qualité d'huile pour valider une détection d'un problème dans les paliers;
   - et/ou les données sur la vitesse de rotation d'un arbre haute pression du moteur et issues des modèles des effets parasites sont fusionnées avec les mesures de température d'huile et du capteur de niveau d'huile pour valider une détection d'une fuite d'huile;
   - et/ou les données sur la vitesse de rotation d'un arbre haute pression du moteur et issues des modèles des effets parasites sont fusionnées avec les mesures de température d'huile, du capteur de niveau d'huile et du capteur de qualité d'huile pour valider une détection d'une fuite de fuel dans l'huile;
- les données issues de mesures prises dans le système de lubrification sont fusionnées avec des données issues de mesures prises à l'extérieur du système de lubrification du moteur de l'avion afin de valider le calcul du statut, de l'évolution et/ou de l'autonomie et afin de valider une détection d'un problème ou d'une panne.

La présente invention se rapporte aussi à un système de lubrification d'un moteur d'avion comportant des capteurs de niveau d'huile, de pression d'huile, de température d'huile, de pression différentielle aux bornes d'un filtre et comportant en outre un capteur de débris et/ou un capteur de qualité d'huile.

La présente invention se rapporte également au moteur d'avion comportant un système de lubrification tel que décrit ci-dessus.

### Brève description des figures

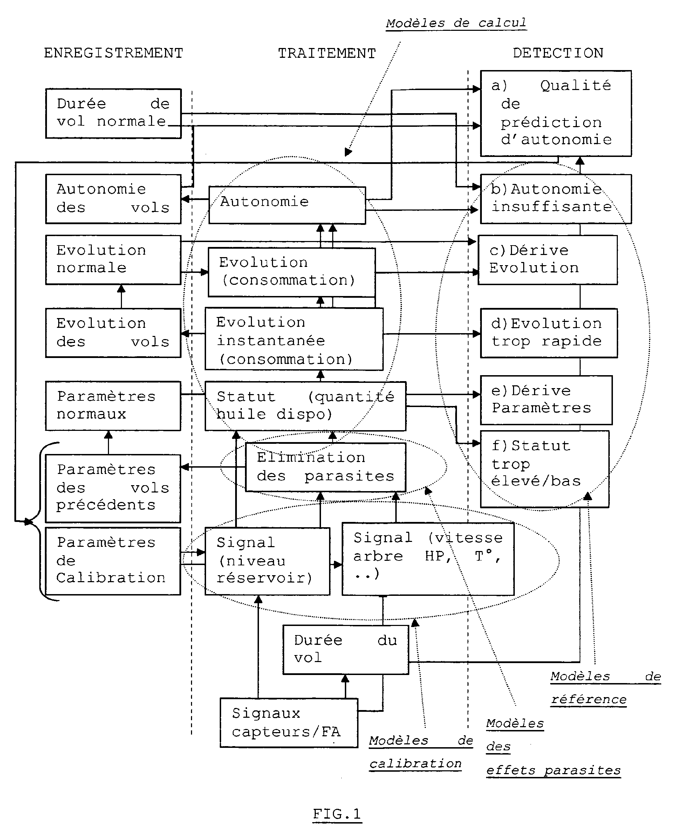

La figure 1 représente un exemple de monotoring appliqué à la détection d'une fuite d'huile selon l'invention.

### Description de l'invention

La présente invention se rapporte à une méthode globale de *health monitoring* du système de lubrification permettant le diagnostic et le pronostic de différentes pannes du moteur et/ou du système de lubrification/refroidissement. On peut citer comme composants/pannes à surveiller:
- la consommation et les fuites d'huile ou les fuites de carburant dans l'huile;
- le vieillissement, la casse et la surchauffe des composants dans les enceintes (roulements, engrenages, joints...);
- la cokéfaction dans les tuyauteries, l'encrassement d'équipements (échangeurs, filtres) ou des injecteurs;
- la détérioration de la qualité d'huile.

Pour ce faire, la méthode selon l'invention utilise les signaux fournis par des capteurs existants tels que le niveau du réservoir d'huile, la pression d'huile, la température d'huile, la pression aux bornes du filtre et peut en outre utiliser les signaux issus de capteurs additionnels qui sont, par exemple, un capteur de débris et/ou un capteur de qualité d'huile. Le capteur de débris permet ainsi de détecter une éventuelle usure d'un roulement tandis que le capteur de qualité d'huile permet de détecter un vieillissement, une surchauffe ou une pollution de l'huile. La méthode selon l'invention peut également utiliser les signaux du moteur (pression ambiante, vitesse de rotation des arbres).

La présente invention fait appel à des modèles de calcul pour évaluer le statut du système et déterminer son évolution et son autonomie et pour détecter un comportement anormal comme ce sera explicité ci-dessous.

Selon l'invention, la fusion des données issues de plusieurs capteurs avec éventuellement des données issues de modèles de référence permet en outre de garantir la qualité du diagnostic. Par exemple, la fusion des données issues du capteur de débris et des données sur la température de sortie de l'enceinte comportant les paliers permet de repérer une usure de ces derniers.

### Description détaillée de l'invention

Selon l'invention, la prédiction des différentes pannes est possible par la mise en place d' algorithmes de calcul de la durée de vie restante avant panne (par exemple, le réservoir vide) basé sur le statut du système (par exemple, la quantité d'huile disponible) et son évolution (par exemple, la consommation et quantité d'huile disponible). On entendra par statut l'état à un moment donné du système ou d'un de ses composants déterminé sur base des mesures effectuées à ce moment donné. Sur cette base (et sur base d'autres éléments), l'évolution du système dans le temps est ensuite déterminée.

Les seuls signaux donnés par les capteurs ne permettent pas de fournir directement le statut du système car ils sont aussi influencés par des mécanismes et effets parasites. Ainsi, le niveau du réservoir d'huile n'est pas seulement fonction de la quantité d'huile disponible mais, entre autre, aussi du *gulping,* c.à.d. de la rétention d'huile dans les enceintes. L'algorithme mis en place pour évaluer le statut et la durée de vie restante doit donc éliminer ou contourner cette problématique.

Une première stratégie consiste à travailler par comparaison entre deux moteurs d'un même avion. Dans ce cas, les effets parasites ne sont pas éliminés mais peuvent être considérés comme identiques sur les deux moteurs. Par différence entre les valeurs des deux moteurs et/ou avec une troisième valeur (théorique ou évaluée pendant le rodage du moteur), on détecte une consommation anormale ou, de manière plus générale, un comportement anormal dans le système de lubrification.

Une deuxième stratégie consiste à travailler par comparaison entre deux phases de vol pour lesquelles les phénomènes parasites sont identiques (par exemple, dans deux phases de croisière stabilisée du même vol ou de deux vols différents, de nombreux paramètres externes sont identiques. Le parasite qu'est le gulping du réservoir d'huile est donc, par conséquent, identique).

Une troisième stratégie consiste à modéliser les mécanismes et effets parasites pour évaluer le statut du système à partir des signaux des capteurs. Cette modélisation peut être empirique (basée sur des méthodes statistiques ou d'apprentissage) ou physique (basée sur les phénomènes internes au moteur) ou une combinaison des deux.

Selon la présente invention, ces différents types de stratégies peuvent être combinés.

Les mécanismes parasites devant être pris en compte pour estimer les différents problèmes/pannes sont repris ci-dessous:
- Pour estimer l'usure de paliers sur base de débris détectés:
   - les débris entrant par le système air.
- Pour estimer la génération de chaleur dans l'enceinte sur base de la température:
   - la vitesse de rotation des arbres haute pression;
   - la température ambiante.
- Pour estimer l'encrassement du circuit d'alimentation en huile sur base de la pression d'alimentation:
   - la viscosité du fluide (et donc la température). A cet égard, un capteur de température est disponible;
   - le débit du fluide. Cela nécessite de connaître la vitesse de rotation de l'arbre haute pression et d'utiliser un modèle de la pompe;
   - la différence de pression entre l'entrée et la sortie du filtre.
- Pour estimer l'encrassement du filtre sur base de la différence de pression entre l'entrée et la sortie du filtre:
   - la viscosité du fluide (et donc la température). A cet égard, un capteur de température est disponible (comme précédemment);
   - le débit du fluide. Cela nécessite de connaître la vitesse de rotation de l'arbre haute pression et d'utiliser un modèle de la pompe (comme précédemment);
   - un modèle de calcul de la différence de pression aux bornes du filtre en fonction de l'encrassement pour différentes tailles de particules.
- Pour estimer la quantité d'huile restante sur base du niveau du réservoir:
   - l'expansion thermique dans le réservoir d'huile. La loi d'expansion thermique de l'huile et la forme du réservoir étant connues avec une bonne précision, la température dans ou à proximité du réservoir suffit à déduire la contribution de ce phénomène dans le niveau d'huile mesuré dans le réservoir;
   - l'attitude et l'accélération. En fonction de la forme du réservoir et de la position du capteur de niveau, l'influence de l'accélération et de l'inclinaison de l'avion peut être prise en compte. On note que dans l'aviation civile, où l'inclinaison ne dépasse pas 20°, on pourrait négliger ces influences pour autant que le capteur soit situé près du centre du réservoir;
   - le *gulping* (rétention d'huile dans les enceintes). Cet effet est la cause majeure de variation du niveau d'huile dans le réservoir. Il dépend de la vitesse de rotation des arbres et de la température de l'huile, elle-même dépendante de la vitesse de rotation (parmi d'autres influences comme la température externe, les autres charges thermiques propres au régime, etc.). La dynamique liée à l'inertie thermique du moteur rend l'identification de cette contribution problématique pendant les périodes transitoires; en s'intéressant à des régimes stabilisés où la vitesse de rotation est constante, on s'affranchit d'une partie de la complexité.
- Effet du vieillissement. Il ne s'agit pas à proprement parler d'un effet parasite mais d'une évolution de la consommation d'huile du moteur avec son âge. Il est important de pourvoir distinguer une augmentation progressive qui est normale d'une augmentation brusque due à une panne. L'évolution de la consommation moyenne avec l'âge peut être préenregistrée (d'après le retour d'expérience sur d'autres moteurs) ou obtenue de manière évolutive par comparaisons successives entre les vols du moteur sous monitoring. Une solution plus simple consiste à déterminer un seuil fixe de consommation à ne pas dépasser, mais la détection de fuite est alors moins sensible.

Selon le degré de connaissance de ces mécanismes et la précision de mesure du signal, la détermination du statut du système et de son évolution sera plus ou moins sensible, et le temps d'intégration nécessaire à cette sensibilité sera plus ou moins grand. Plus particulièrement, le niveau de prédiction de la contribution des mécanismes parasites déterminera différents niveaux d'architectures d'algorithmes - auxquels correspondent des possibilités différentes d'exploitation de résultats (voir tableau 1).

Au stade 0, les effets parasites ne sont pas estimés et les mesures sont prises en début et fin de vol et le statut est ensuite comparé à celui du vol précédent.

Au stade 1, les effets parasites sont estimés en fonction des mesures effectuées lors de l'arrêt du moteur; la précision du statut et de l'évolution est ainsi affinée.

Au stade 2, les effets parasites moyens sont connus pour chaque régime moteur et l'évolution peut ainsi être calculée pour chaque phase de vol.

Au stade 3, plusieurs mesures sont effectuées par phase et finalement, au stade 4, les mesures sont effectuées en continu (transitoires compris).

**Tableau 1**

| **Connaissance des parasites et mesures du signal** | **Détection au sol** | **Détection en vol** |
|---|---|---|
| **Stade 0:** | -Parasites restants après le vol sont considérés comme perdus | Ø |
| -Pas d'estimation des parasites | -Le statut est comparé à celui du vol précédent | |
| -Mesures du signal en début et fin de vol | -Une dérive limitée est détectable | |
| | -L'autonomie et l'évolution sont calculées en "vols standards", en heures de vol ou en cycle | |
| **Stade 1:** | -Idem stade 0, mais les parasites restants sont évalués, et les résultats sont moins conservateurs | Ø |
| -Parasites estimés en fonction des mesures effectuées à l'arrêt moteur | -La précision du statut, de l'évolution et de l'autonomie est affinée | |
| -Mesures du signal au début et en fin de vol | | |
| **Stade 2:** | -L'évolution et l'autonomie sont calculées par phase | Ø |
| -Parasites moyens en fonction des paramètres mesurés sont connus pour chaque régime moteur, à vitesse de rotation constante (≠ 0) | -Dérives plus réduites et à plus court laps de temps (par phase) détectables | |
| -Mesures du signal au début et à la fin de chaque phase | -Calcul de l'évolution et de l'autonomie spécifiques aux vols à venir (en fonction de leurs phases) | |
| **Stade 3:** | -La détection reste similaire au cas précédent en plus précise | -Dérive détectable pendant une phase |
| -Même connaissance du parasite qu'au stade 2 | | -En cas de dérive, indication d'une nouvelle autonomie estimée en heures de vols ou cycles |
| -Plusieurs mesures du signal par phase | | -Le système doit être désactivé pendant les transitoires |
| **Stade 4:** | -Idem stade 3 | -L'évolution est évaluée pendant les transitoires |
| -Parasites connus en fonction des paramètres mesurés | | -La détection de dérive est possible en transitoire |
| -Plusieurs mesures de signal par phase et pendant les transitoires | | -Le calcul de l'autonomie est plus précis |

La figure 1 présente, à titre d'exemple non limitatif, la méthode de monitoring selon l'invention pour la détection d'une fuite d'huile. Les différents modèles intervenant dans la méthode sont indiqués en italique et soulignés.

Plusieurs enregistrements de données sont réalisés pour permettre d'initialiser les paramètres des modèles (modèles de calcul, des effets parasites, de calibration et de référence), de comparer les paramètres des modèles permettant le calcul du statut ou de l'évolution à ceux de modèles de référence (par ex. modèle de gulping, modèle de génération de débris, modèle de niveau de réservoir d'huile en fonction du contenu, modèle de performance de la pompe, modèle de différence de pression aux bornes du filtre, modèle de génération de chaleur dans l'enceinte) et ainsi repérer une dérive, de mettre à jour les paramètres des modèles sur base des vols récents afin de prendre en compte le vieillissement du moteur et enfin de réaliser une amélioration continue des différents paramètres (calibration des capteurs et modèles) grâce au retour d'informations entre l'autonomie prévue, le nombre d'heures écoulées et l'autonomie actuelle.

Différentes détections peuvent donner lieu à des alertes:
■ Simple et robuste, (voir détection f)), le statut a atteint un niveau critique. Il s'agit déjà d'une avancée par rapport à l'état de l'art puisque le statut est actuellement défini par deux voire même un seul niveau d'alerte. Les niveaux ici peuvent être multiples.
■ Une deuxième amélioration (détection d)) est de pouvoir définir une alerte non pas sur le statut mais sur l'évolution et donc réagir de façon préventive.

■ Une autre amélioration (détections c) et e)) plus sophistiquée et permettant une anticipation est de baser la détection sur une dérive des paramètres des modèles permettant le calcul du statut ou de l'évolution. Ils permettent en effet de réagir non pas uniquement sur la valeur du statut et de l'évolution mais également sur la dérivée de ceux-ci.
■ Enfin, une détection de l'autonomie (détection b)) suffisante ou non est possible et permet non seulement un vol sûr mais également la gestion de la maintenance.

Toujours selon l'invention, la fusion des données issues de plusieurs capteurs avec éventuellement des données issues des modèles de référence et/ou des modèles des effets parasites permet de garantir la qualité du diagnostic. Ainsi, la fusion des données suivantes permet de valider la détection de problèmes spécifiques.
- Régime moteur + Modèle de performance de la pompe (évite l'utilisation d'un débitmètre cher et peu fiable) + Température d'huile + Pression d'huile → Détection du colmatage d'éléments du circuit d'alimentation (filtre, injecteurs, échangeurs, etc.).
- Régime moteur + Modèle de performance de la pompe + Modèle de différence de pression aux bornes du filtre + Température d'huile + Différence de pression aux bornes du filtre → Détection du colmatage du filtre.
- Régime moteur + Modèle de performance de la pompe + Température + Pression + Différence de pression aux bornes du filtre → Distinction entre le colmatage du filtre ou le colmatage d'un autre élément.
- Régime moteur + Modèle de génération de chaleur dans l'enceinte + Température d'huile → Détection d'une génération de chaleur anormale (churning, ...) .
- Régime moteur + Modèle de génération de chaleur dans l'enceinte + Température d'huile + Débris paliers + Capteur de qualité d'huile → Validation d'un problème dans les paliers.
- Vitesse de rotation de l'arbre haute pression + Modèles des effets parasites + Température d'huile + Capteur de niveau d'huile → Détection d'une fuite d'huile.
- Vitesse de rotation de l'arbre haute pression + Modèles des effets parasites + Température d'huile + Capteur de niveau d'huile + Capteur de qualité d'huile → Détection d'une fuite de fuel dans l'huile.

Selon la présente invention, les données prises au niveau du système d'huile peuvent également être fusionnées avec des données complémentaires prises à l'extérieur du système d'huile, par exemple au niveau du moteur, afin de valider l'information de statut, d'évolution, d'autonomie ou de défaillance d'un composant ou système à travers deux chaînes d'informations indépendantes. Par exemple, les informations données par le système d'huile sur les roulements moteur à travers la mesure de débris et/ou la température en sortie des enceintes peuvent être fusionnées avec les informations fournies par le système de mesure de vibration afin de valider leur pertinence.

### Avantages de l'invention

Le *health monitoring* du système d'huile permet la gestion du vol et la gestion de la maintenance grâce respectivement aux mesures en vol et aux mesures au sol.

Le *health monitoring* du système d'huile permet de faire un diagnostic pertinent de cette partie du moteur car il dispose de toutes les informations utiles. Il permet en outre de réaliser une fusion de données rationnelle afin de garantir la validité du pronostic réalisé.

Le *health monitoring* du système d'huile permet également de renvoyer un statut simple vers le système de *health monitoring* supérieur (moteur ou avion) sur les différents composants/pannes surveillés.

## Revendications

1. Méthode globale de monitoring permettant le calcul de l'autonomie d'un système de lubrification d'un moteur d'avion, permettant en outre le diagnostic et le pronostic d'une pluralité de problèmes et pannes du moteur et de son système de lubrification, ladite méthode étant utilisée pour la gestion en vol de l'avion et pour la gestion de la maintenance de l'avion et étant apte à diagnostiquer et à pronostiquer :
- une fuite d'huile ou une fuite de fuel dans l'huile,
- un vieillissement, une casse et une surchauffe de paliers contenus dans une enceinte du système de lubrification,
- une cokéfaction de l'huile dans des tuyauteries, un encrassement/colmatage dans un circuit d'alimentation en huile,
- une détérioration de la qualité de l'huile;
le diagnostic et le pronostic de la pluralité de problèmes et pannes du moteur et de son système de lubrification s'effectuant à l'aide de mesures prises par des capteurs disposés dans ledit système de lubrification, les capteurs mesurant respectivement un niveau d'huile, une température d'huile, une pression d'huile, une pression différentielle aux bornes d'un filtre, la qualité de l'huile et la présence de débris dans l'huile, la méthode comprenant l'étape de calculer le statut du système de lubrification ou d'un de ses composants à un moment donné sur base desdites mesures effectuées à ce moment donné et de calculer son évolution dans le temps afin de déterminer la durée de vie restante avant une panne, des données issues de mesures de plusieurs capteurs étant fusionnées avec des données issues de modèles de référence pour valider une détection d'un problème ou d'une panne.

2. Méthode selon la revendication 1, **caractérisée en ce qu'**elle s'affranchit des effets parasites influençant les mesures :
- a) soit en comparant les signaux de deux moteurs de l'avion, éventuellement avec une valeur de référence, lesdits moteurs étant dans des conditions sensiblement identiques,
- b) soit en comparant deux phases d'un même vol ou de vols différents pour lesquelles les effets parasites sont identiques,
- c) soit en modélisant les effets parasites, ladite modélisation étant empirique ou physique ou une combinaison des deux,
- d) soit en combinant a), b) et c).

3. Méthode selon la revendication 1, **caractérisée en ce que** le capteur mesurant la qualité de l'huile détecte un vieillissement, une surchauffe ou une pollution de l'huile.

4. Méthode selon la revendication 1, **caractérisée en ce que**, par ordre croissant de précision du calcul du statut, de l'évolution et de l'autonomie du système, les mesures sont prises comme suit:
- les mesures sont prises en début et fin de vol et le statut, l'évolution et l'autonomie sont calculés sur base de ces mesures;
- ou les mesures sont prises en début et fin de chaque phase de vol et le statut, l'évolution et l'autonomie sont calculés sur base de ces mesures pour chaque phase de vol;
- ou les mesures sont prises plusieurs fois par phase de vol et le statut, l'évolution et l'autonomie sont calculés sur base de ces mesures pour chaque phase de vol;
- ou les mesures sont prises plusieurs fois par phase de vol ainsi que pendant les transitoires séparant les phases de vol et le statut, l'évolution et l'autonomie sont calculés sur base de ces mesures pour chaque phase de vol et pendant les transitoires.

5. Méthode selon l'une quelconque des revendications précédentes, **caractérisée en ce qu'**elle compare des paramètres des modèles de calcul du statut et des paramètres des modèles de calcul de l'évolution avec des paramètres des modèles de référence afin de détecter un comportement anormal.

6. Méthode selon la revendication 5, **caractérisée en ce que** les modèles de référence sont un modèle de gulping, un modèle de génération de débris, un modèle de niveau de réservoir d'huile en fonction du contenu, un modèle de performance d'une pompe, un modèle de différence de pression aux bornes d'un filtre et un modèle de génération de chaleur dans l'enceinte.

7. Méthode selon la revendication 5, **caractérisée en ce que** plusieurs enregistrements de données relatives au vol en cours et aux vols précédents sont effectués pour initialiser les paramètres des modèles, pour initialiser des paramètres de calibration des capteurs, pour comparer les paramètres des modèles de calcul du statut et de l'évolution et les paramètres de calibration à ceux des modèles de référence et ainsi repérer une dérive, pour mettre à jour les paramètres des modèles sur base des modèles des vols récents afin de prendre en compte le vieillissement du moteur et afin de réaliser une amélioration continue des différents paramètres grâce au retour d'expérience.

8. Méthode selon la revendication 5, **caractérisée en ce qu'**une alerte est déclenchée lorsque :
- le statut a atteint un niveau critique,
- l'évolution est anormale,
- une dérive des paramètres des modèles permettant le calcul du statut ou de l'évolution est observée,
- l'autonomie est insuffisante.

9. Méthode selon l'une quelconque des revendications précédentes, **caractérisée en ce qu'**elle renvoie le statut du système de lubrification vers un système supérieur de monitoring d'un moteur ou de l'avion.

10. Méthode selon l'une quelconque des revendications précédentes, **caractérisée en ce que** les données issues de mesures de plusieurs capteurs fusionnées avec les données issues des modèles de référence sont également fusionnées avec des données des modèles des effets parasites pour valider une détection d'un problème ou d'une panne.

11. Méthode selon la revendication 1 ou 10, **caractérisée en ce que**:
- des données sur le régime moteur et issues du modèle de performance d'une pompe sont fusionnées avec les mesures de température et de pression d'huile pour valider la détection du colmatage d'éléments du circuit d'alimentation tels que le filtre, des injecteurs et des échangeurs;
- des données sur le régime moteur et issues du modèle de performance d'une pompe et du modèle de différence de pression aux bornes du filtre sont fusionnées avec les mesures de température d'huile et de différence de pression aux bornes du filtre pour valider une détection du colmatage du filtre;
- des données sur le régime moteur et issues du modèle de performance d'une pompe sont fusionnées avec les mesures de température et de pression d'huile ainsi qu'avec les mesures de différence de pression aux bornes du filtre pour distinguer le colmatage du filtre du colmatage d'un autre élément du circuit d'alimentation;
- des données sur le régime moteur et issues du modèle de génération de chaleur dans l'enceinte sont fusionnées avec les mesures de température d'huile pour valider une détection d'une génération de chaleur anormale;
- des données sur le régime moteur et issues du modèle de génération de chaleur dans l'enceinte sont fusionnées avec les mesures de température d'huile, de débris et du capteur de qualité d'huile pour valider une détection d'un problème dans les paliers;
- les données sur la vitesse de rotation d'un arbre haute pression du moteur et issues des modèles des effets parasites sont fusionnées avec les mesures de température d'huile et du capteur de niveau d'huile pour valider une détection d'une fuite d'huile;
- les données sur la vitesse de rotation d'un arbre haute pression du moteur et issues des modèles des effets parasites sont fusionnées avec les mesures de température d'huile, du capteur de niveau d'huile et du capteur de qualité d'huile pour valider une détection d'une fuite de fuel dans l'huile.

12. Méthode selon l'une quelconque des revendications précédentes, **caractérisée en ce que** les données issues de mesures prises dans le système de lubrification sont fusionnées avec des données issues de mesures prises à l'extérieur du système de lubrification du moteur de l'avion afin de valider le calcul du statut, de l'évolution ou de l'autonomie et afin de valider une détection d'un problème ou d'une panne.

## Patentansprüche

1. Allgemeine Überwachungsmethode, die die Berechnung der Autonomie eines Schmiersystems eines Flugzeugmotors erlaubt, wobei sie ferner die Diagnose und die Prognose einer Vielzahl von Problemen und Pannen des Motors und seines Schmiersystems erlaubt, wobei die Methode für das Management des Flugzeugs im Flug und für das Management der Wartung des Flugzeugs verwendet wird und imstande ist, zu diagnostizieren und prognostizieren:
- einen Ölaustritt oder einen Treibstoffaustritt in das Öl,
- eine Alterung, einen Bruch und eine Überhitzung von Lagern, die in einer Umschließung des Schmiersystems enthalten sind,
- eine Verkokung des Öls in Rohrleitungen, eine Verschmutzung / Verstopfung in einem Ölversorgungskreis,
- eine Verschlechterung der Ölqualität,
wobei die Diagnose und die Prognose der Vielzahl von Problemen und Pannen des Motors und seines Schmiersystems mit Hilfe von Messungen durch Sensoren erfolgen, die in dem Schmiersystem angeordnet sind, wobei die Sensoren jeweils einen Ölstand, eine Öltemperatur, einen Öldruck, einen Differentialdruck an den Klemmen eines Filters, die Ölqualität und das Vorhandensein von Schlacken im Öl messen, wobei die Methode den Schritt zur Berechnung des Status des Schmiersystems oder einer seiner Komponenten zu einem bestimmten Moment auf der Basis der in diesem bestimmten Moment durchgeführten Messungen und die Berechnung seiner Entwicklung im Laufe der Zeit umfasst, um die verbleibende Lebensdauer vor einer Panne zu bestimmen, wobei Messdaten mehrerer Sensoren mit Daten aus Referenzmodellen zusammengeführt werden, um die Ermittlung eines Problems oder einer Panne zu bestätigen.

2. Methode nach Anspruch 1, **dadurch gekennzeichnet, dass** sie Störeffekte, die die Messungen beeinflussen, umgeht:
- a) entweder durch Vergleichen der Signale von zwei Flugzeugmotoren, eventuell mit einem Referenzwert, wobei die Motoren unter etwa identischen Bedingungen sind,
- b) oder durch Vergleichen von zwei Phasen eines selben Flugs oder unterschiedlicher Flüge, für die Störeffekte identisch sind,
- c) oder durch Modellieren der Störeffekte, wobei die Modellierung empirisch oder physikalisch ist oder eine Kombination von beidem,
- d) oder durch Kombinieren von a), b) und c).

3. Methode nach Anspruch 1, **dadurch gekennzeichnet, dass** der Sensor, der die Ölqualität misst, eine Alterung, eine Überhitzung oder eine Verschmutzung des Öls ermittelt.

4. Methode nach Anspruch 1, **dadurch gekennzeichnet, dass** die Messungen mit zunehmender Berechnungspräzision des Status, der Entwicklung und der Autonomie des Systems folgendermaßen vorgenommen werden:
- die Messungen erfolgen zu Beginn und am Ende des Flugs, und der Status, die Entwicklung und die Autonomie werden auf der Basis dieser Messungen berechnet,
- oder die Messungen erfolgen zu Beginn und am Ende jeder Flugphase, und der Status, die Entwicklung und die Autonomie werden auf der Basis dieser Messungen für jede Flugphase berechnet,
- oder die Messungen erfolgen mehrmals je Flugphase, und der Status, die Entwicklung und die Autonomie werden auf der Basis dieser Messungen für jede Flugphase berechnet,
- oder die Messungen erfolgen mehrmals je Flugphase sowie während der Übergänge, die die Flugphasen trennen, und der Status, die Entwicklung und die Autonomie werden auf der Basis dieser Messungen für jede Flugphase und während der Übergänge berechnet.

5. Methode nach einem der vorangehenden Ansprüche, **dadurch gekennzeichnet, dass** sie Parameter der Berechnungsmodelle des Status und Parameter der Berechnungsmodelle der Entwicklung mit Parametern der Referenzmodelle vergleicht, um ein anormales Verhalten zu ermitteln.

6. Methode nach Anspruch 5, **dadurch gekennzeichnet, dass** die Referenzmodelle ein Gulpingmodell, ein Schlackenbildungsmodell, ein Modell des Ölstands im Behälter in Abhängigkeit vom Inhalt, ein Leistungsmodell einer Pumpe, ein Druckdifferenzmodell an den Klemmen eines Filters und ein Wärmeentwicklungsmodell in der Umschließung sind.

7. Methode nach Anspruch 5, **dadurch gekennzeichnet, dass** mehrere Aufzeichnungen von Daten, die sich auf den aktuellen Flug und auf vorhergehende Flüge beziehen, durchgeführt werden, um die Parameter der Modelle zu initialisieren, um Eichparameter der Sensoren zu initialisieren, um die Parameter der Berechnungsmodelle des Status und der Entwicklung und die Eichparameter mit denen der Referenzmodelle zu vergleichen und so eine Abweichung festzustellen, um die Modellparameter auf der Basis der Modelle neuerer Flüge zu aktualisieren, um die Alterung des Motors zu berücksichtigen und um eine kontinuierliche Verbesserung der diversen Parameter dank Erfahrungsrücklauf durchzuführen.

8. Methode nach Anspruch 5, **dadurch gekennzeichnet, dass** eine Warnung ausgelöst wird, wenn:
- der Status ein kritisches Niveau erreicht,
- die Entwicklung anormal ist,
- eine Abweichung von den Parametern der Modelle, die die Berechnung des Status oder der Entwicklung erlauben, beobachtet wird,
- die Autonomie ungenügend ist.

9. Methode nach einem der vorangehenden Ansprüche, **dadurch gekennzeichnet, dass** sie den Status des Schmiersystems an ein übergeordnetes Überwachungssystem eines Motors oder des Flugzeugs weiterleitet.

10. Methode nach einem der vorangehenden Ansprüche, **dadurch gekennzeichnet, dass** die mit den Daten der Referenzmodelle zusammengeführten Daten aus den Messungen mehrerer Sensoren ebenfalls mit Daten der Modelle der Störeffekte zusammengeführt werden, um eine Ermittlung eines Problems oder einer Panne zu bestätigen.

11. Methode nach Anspruch 1 oder 10, **dadurch gekennzeichnet, dass**:
- Daten über die Motordrehzahl und aus dem Leistungsmodell einer Pumpe mit den Öltemperatur- und -druckmessungen zusammengeführt werden, um die Ermittlung der Verstopfung von Elementen des Versorgungskreises wie Filter, Injektoren und Tauscher zu bestätigen,
- Daten über die Motordrehzahl und aus dem Leistungsmodell einer Pumpe und dem Druckdifferenzmodell an den Klemmen des Filters mit den Öltemperatur- und Druckdifferenzmessungen an den Klemmen des Filters zusammengeführt werden, um eine Ermittlung der Verstopfung des Filters zu bestätigen,
- Daten über die Motordrehzahl und aus dem Leistungsmodell einer Pumpe mit den Öltemperatur- und -druckmessungen sowie mit den Druckdifferenzmessungen an den Klemmen des Filters zusammengeführt werden, um die Verstopfung des Filters von einem anderen Element des Versorgungskreises zu unterscheiden,
- Daten über die Motordrehzahl und aus dem Wärmeentwicklungsmodell in der Umschließung mit den Öltemperaturmessungen zusammengeführt werden, um eine Ermittlung einer anormalen Wärmeentwicklung zu bestätigen,
- Daten über die Motordrehzahl und aus dem Wärmeentwicklungsmodell in der Umschließung mit den Öltemperaturmessungen, Schlackemessungen und Messungen des Ölqualitätssensors zusammengeführt werden, um eine Ermittlung eines Problems in den Lagern zu bestätigen,
- die Daten über die Drehgeschwindigkeit einer Hochdruckwelle des Motors und aus den Störeffektmodellen mit Öltemperaturmessungen und Messungen des Ölstandssensors zusammengeführt werden, um eine Ermittlung eines Ölaustritts zu bestätigen,
- die Daten über die Drehgeschwindigkeit einer Hochdruckwelle des Motors und aus den Störeffektmodellen mit Öltemperaturmessungen, Messungen des Ölstands- und Ölqualitätssensors zusammengeführt werden, um eine Ermittlung eines Treibstoffabgangs in das Öl zu bestätigen.

12. Methode nach einem der vorangehenden Ansprüche, **dadurch gekennzeichnet, dass** die Daten von Messungen, die im Schmiersystem vorgenommen wurden, mit Daten von Messungen zusammengeführt werden, die aus Messungen außerhalb des Schmiersystems des Motors des Flugzeugs stammen, um die Berechnung des Status, der Entwicklung oder der Autonomie zu bestätigen und um die Ermittlung eines Problems oder einer Panne zu bestätigen.

## Claims

1. A global monitoring method allowing to compute the autonomy of a lubrication system for an airplane engine, further allowing the diagnosis and prognosis of a plurality of problems and breakdowns of the engine and of its lubrication system, said method being used for the in-flight management of the airplane and for the management of the airplane maintenance and being able to diagnose and prognosticate:
- oil leak or fuel leak in the oil,
- aging, breakage and overheating of bearings contained in an enclosure of the lubrication system,
- oil coking in hoses, dirtying/clogging in an oil-supply circuit,
- deteriorating of the oil quality;
the diagnosis and prognosis of the plurality of problems and breakdowns of the engine and of its lubrication system being achieved by means of measurements taken by sensors positioned in said lubrication system, the sensors measuring an oil level, an oil temperature, an oil pressure, a differential pressure at the terminals of a filter, the oil quality and the presence of debris in the oil, respectively, the method comprising the step of computing the status of the lubrication system or of one of its components at a given time based on said measurements taken at that given time and of computing its evolution over time in order to determine the remaining lifetime before breakdown, data from measurements of several sensors being merged with data from reference models in order to validate the detection of a problem or breakdown.

2. The method according to Claim 1, **characterized in that** it eliminates parasitic effects influencing the measurements:
- a) either by comparing the signals from two engines of the airplane, optionally with a reference value, said engines being under substantially identical conditions,
- b) or by comparing two phases of a same flight or of different flights for which the parasitic effects are identical,
- c) or by modeling the parasitic effects, said modeling being empirical or physical or a combination of the two,
- d) or by combining a), b) and c).

3. The method according to Claim 1, **characterized in that** the sensor measuring the oil quality detects aging, overheating or pollution of the oil.

4. The method according to Claim 1, **characterized in that**, by decreasing order of precision of the computation of the status, evolution and autonomy of the system, the measurements are taken as follows:
- the measurements are taken at the beginning and at the end of the flight and the status, evolution and autonomy are computed based on those measurements;
- or the measurements are taken at the beginning and at the end of each phase of the flight and the status, evolution and autonomy are computed based on those measurements for each phase of the flight;
- or the measurements are taken several times per phase of the flight and the status, evolution and autonomy are computed based on those measurements for each phase of the flight;
- or the measurements are taken several times per phase of the flight as well as during the transitions separating the phases of the flight and the status, evolution and autonomy are computed based on those measurements for each phase of the flight and during the transitions.

5. The method according to any one of the preceding claims, **characterized in that** it compares parameters of the models for computing the status and parameters of the models for computing the evolution with parameters of the reference models in order to detect abnormal behavior.

6. The method according to Claim 5, **characterized in that** the reference models are a gulping model, a debris-generation model, an oil-tank level model based on the content, a performance model of a pump, a pressure-difference model at the terminals of a filter and a heat-generation model in the enclosure.

7. The method according to Claim 5, **characterized in that** several data recordings relative to the on-going flight and to the preceding flights are achieved to initialize the parameters of the models, to initialize the calibration parameters of the sensors, to compare the parameters of the models for computing the status and the evolution and the calibration parameters to those of the reference models and thus identifying a drift, in order to update the parameters of the models based on models from recent flights to take into account the aging of the engine and to continuously improve the various parameters thanks to feedback.

8. The method according to Claim 5, **characterized in that** an alert is activated when:
- the status has reached a critical level,
- the evolution is abnormal,
- any drift in the parameters of the models allowing the computation of the status or evolution is observed,
- autonomy is insufficient.

9. The method according to any one of the preceding claims, **characterized in that** it returns the status of the lubrication system to a higher monitoring system of an engine or of the airplane.

10. The method according to any one of the preceding claims, **characterized in that** the data from the measurements of several sensors merged with the data from the reference models are also merged with data from models of the parasitic effects in order to validate the detection of a problem or breakdown.

11. The method according to Claim 1 or 10, **characterized in that**:
- data on the engine rating and from the performance model of a pump are merged with the oil temperature and pressure measurements in order to validate the detection of the clogging of elements of the supply circuit such as the filter, injectors and exchangers;
- data on the engine rating and from the performance model of a pump and the pressure-difference model at the terminals of the filter are merged with the oil temperature and pressure-difference measurements at the terminals of the filter in order to validate the detection of the clogging of the filter;
- data on the engine rating and from the performance model of a pump are merged with the oil temperature and pressure measurements as well as with the pressure-difference measurements at the terminals of the filter in order to distinguish the clogging of the filter from the clogging of another element of the supply circuit;
- data on the engine rating and from the heat-generation model in the enclosure are merged with the oil-temperature measurements in order to validate the detection of abnormal heat generation;
- data on the engine rating and from the heat-generation model in the enclosure are merged with the measurements of oil temperature, debris and oil-quality sensor in order to validate the detection of a problem in the bearings;
- the data on the rotation speed of a high-pressure shaft of the engine and from models of the parasitic effects are merged with the oil-temperature measurements and the measurements from the oil-level sensor in order to validate the detection of an oil leak;
- the data on the rotation speed of a high-pressure shaft of the engine and from models of the parasitic effects are merged with the measurements of oil temperature, of the oil level sensor and of the oil quality sensor in order to validate the detection of a fuel leak in the oil.

12. The method according to any one of the preceding claims, **characterized in that** the data from measurements taken in the lubrication system are merged with data from measurements taken outside the lubrication system of the airplane engine in order to validate the computation of the status, evolution or autonomy and in order to validate the detection of a problem or breakdown.
